# EUROPÄISCHE PATENTSCHRIFT

(11) **EP 2 687 464 B1**
(45) Veröffentlichungstag und Bekanntmachung des Hinweises auf die Patenterteilung: **08.07.2015**
(21) Anmeldenummer: 13176844.2
(22) Anmeldetag: 17.07.2013
(51) Int. Cl.: B65G 17/00

(54) **Stauförderer**
Accumulating conveyor
Convoyeur à accumulation

(30) Priorität: 19.07.2012 DE 102012106548
(43) Veröffentlichungstag der Anmeldung: 22.01.2014
(73) Patentinhaber: Koppold, Markus, 86562 Berg im Gau (DE)
(72) Erfinder: Koppold, Markus, 86562 Berg im Gau (DE)
(74) Vertreter: Fischer, Matthias

(56) Entgegenhaltungen:
- DE-A1- 19 957 841
- DE-A1-102009 056 545
- US-A- 5 735 384
- US-A1- 2001 025 767

## Beschreibung

Die vorliegende Erfindung betrifft einen Stauförderer nach dem Oberbegriff des Anspruchs 1, wie er aus der DE-A-102009056545 bekannt ist.

Gattungsgemäße Stauförderer sind im Stand der Technik bekannt und dienen, insbesondere an industriellen Fertigungslinien, der Zwischenspeicherung von zu verbauenden Bauteilen. Der Stauförderer besitzt hierfür eine Aufgabeseite, an welcher der oder die Transportschlitten mit dem entsprechenden Bauteil beladen werden. Nach Passieren des oberen Förderabschnitts gelangt der Transportschlitten schließlich in den Bereich einer der Aufgabeseite gegenüberliegenden Entnahmeseite, an der das Bauteil schließlich vom Transportschlitten entnommen und entsprechend verbaut werden kann. Um den leeren Schlitten erneut beladen zu können, erfolgt im Anschluss an die Entnahme des Bauteils eine Rückführung des Transportschlittens entlang der beiden parallel verlaufenden ersten Umlenkabschnitte, der angrenzenden unteren Förderabschnitte und schließlich entlang der beiden ebenfalls parallel verlaufenden zweiten Umlenkabschnitte. Im Ergebnis wird der Transportschlitten also auf einer langgestreckten Kreisbahn geführt und dient zwischen den jeweiligen Umlenkabschnitten als Speicher- und Transportelement.

Nachteilig bei den bekannten Stauförderern ist die Tatsache, dass der Transport der Transportschlitten entlang der jeweiligen Umlenkabschnitte ein hohes Drehmoment erfordert. Der Antrieb muss daher eine Leistung aufweisen, welche die für den Transport der Transportelemente entlang der meist geradlinigen Förderabschnitte notwendige Leistung signifikant übersteigt. Aufgabe der vorliegenden Erfindung ist es daher, einen Stauförderer vorzuschlagen, der eine Bewegung der Transportschlitten im Bereich der Umlenkabschnitte mit einer möglichst geringen Antriebsleistung erlaubt.

Die Aufgabe wird gelöst durch einen Stauförderer mit den Merkmalen des Patentanspruchs 1.

Mit anderen Worten wirken die Endlosförderelemente, das bzw. die Radelemente der vorhandenen Transportschlitten und die Eingriffsmittel in den Umlenkabschnitten nach Art eines Planetengetriebes zusammen. Während es nämlich vor dem Zusammenwirken von Zahnrad und Eingriffsmittel zu keiner Relativbewegung zwischen Zahnrad und entsprechendem Endlosförderelement kommt, entsteht die genannte Relativbewegung nach dem Eingriff der ortsfest angeordneten Eingriffsmittel zwangsläufig, da das Radelement an diesen abrollen muss. Die Umfangsgeschwindigkeit des Radelements entspricht somit in diesem Bereich nur noch einem Bruchteil, beispielsweise der Hälfte, der Fördergeschwindigkeit der Endlosförderelemente. Im Ergebnis muss der eingesetzte Antrieb daher im Bereich der Umlenkabschnitte ein wesentlich geringeres Drehmoment zur Verfügung stellen als bei herkömmlichen Stauförderern, bei denen die Umlenkung der Transportschlitten bei voller Fördergeschwindigkeit der Endlosförderelemente erfolgt. Ebenso ist es möglich, die Fördergeschwindigkeit der Transportschlitten im Bereich der Förderabschnitte im Vergleich zu bekannten Stauförderern besonders hoch zu wählen, da die Geschwindigkeit der Transportschlitten im Bereich der Umlenkabschnitte wieder reduziert wird (und damit eine zuverlässige Umlenkung sichergestellt ist). Schließlich wird durch die erfindungsgemäßen Eingriffsmittel eine besonders harmonische Umlenkung der Transportschlitten ermöglicht, da diese im Gegensatz zu bekannten Systemen vor der Umlenkphase nicht mehr abrupt abgestoppt werden müssen.

Vorteile bringt es mit sich, wenn die Umlenkabschnitte in der Seitenansicht des Stauförderers einen kreisbogenförmigen Verlauf aufweisen, und wenn zumindest ein Teil der Eingriffsmittel auf einer zum Verlauf des jeweils benachbarten Umlenkabschnitts konzentrisch verlaufenden Bahn angeordnet sind. Die Endlosförderelemente können in diesem Fall von kreisförmigen Antriebselementen angetrieben werden. Es ist also denkbar, dass die beiden parallel verlaufenden Endlosförderelemente um jeweils zwei voneinander beabstandete Zahnräder oder Riemenscheiben geschlungen sind. Eines oder mehrere der genannten Elemente steht schließlich mit dem Antrieb (z. B. einem Elektromotor) des Stauförderers in Verbindung, so dass eine Aktivierung des Antriebs eine Bewegung der Endlosförderelemente bewirkt. Die Umlenkabschnitte bilden schließlich vorzugsweise Halbkreise, an deren Enden sich die oberen und unteren Förderabschnitte anschließen.

Ebenso ist es vorteilhaft, wenn die Endlosförderelemente als Endlosketten ausgebildet sind, die über wenigstens ein Antriebszahnrad mit dem Antrieb des Stauförderers in Wirkverbindung stehen. Endlosketten haben gegenüber den ebenfalls möglichen Endlosriemen den Vorteil, dass der Kontakt zwischen den Endlosförderelementen und den entsprechenden Antriebselementen über Formschluss erfolgen kann. Vorzugsweise sind also zwei parallel verlaufende Antriebsketten vorhanden, die jeweils über zwei beabstandete Zahnräder geführt werden, wobei jeweils ein Zahnrad (= Antriebszahnrad) pro Förderbahn mit dem Antrieb in Verbindung stehen sollte.

Auch ist es äußerst vorteilhaft, wenn das Radelement des Transportschlittens als Zahnrad ausgebildet ist, das im Eingriff mit einer der Endlosketten steht. Auch hierdurch entsteht der gewünschte Formschluss zwischen beiden Elementen, der einen zuverlässigen Betrieb des Stauförderers ohne Schlupf ermöglicht. Vorzugsweise steht das Zahnrad zudem mit einem transportschlitteneigenen Bremselement in Wirkverbindung, welches eine definierte Kraft auf das oder die Zahnräder des jeweiligen Transportschlittens bzw. deren Lagerung ausübt. Im Ergebnis wird durch die Bremswirkung sichergestellt, dass eine Bewegung der Endlosketten eine Bewegung des entsprechenden Transportschlittens bewirkt, da eine Relativbewegung zwischen Transportschlitten und Endlosförderelementen unterbunden wird. Die Bremselemente wirken hierbei vorzugsweise über Reibschluss, so dass die Bremswirkung prinzipiell überwindbar ist. Insbesondere kann sich diese auf die Förderabschnitte beschränken, da der Transport des entsprechenden Transportschlittens im Bereich der Umlenkabschnitte durch Zusammenspiel der Endlosförderelemente mit den Eingriffsmitteln sichergestellt wird, wobei in diesem Bereich zwangsläufig eine Relativbewegung zwischen dem oder den Zahnrädern eines Transportschlittens und den jeweiligen Endlosförderelementen stattfindet.

Des Weiteren ist es vorteilhaft, wenn die Eingriffsmittel als Bolzen ausgebildet sind, die vorzugsweise senkrecht zu einer Transportrichtung des Transportschlittens ausgerichtet sind. Die Bolzen, die im Querschnitt rund oder auch andersförmig ausgebildet sein können, gelangen beim Passieren eines Transportschlittens mit dem Zahnrad des Transportschlittens in Eingriff und bewirken hierbei bei konstanter Fördergeschwindigkeit der Endlosketten nach Art eines Planetengetriebes eine Reduzierung der Geschwindigkeit des Transportschlittens. Selbstverständlich können die Bolzen im Bereich aller Umlenkabschnitte oder nur an jeweils einem Umlenkabschnitt einer Stirnseite des Stauförderers platziert sein.

Ebenso ist es vorteilhaft, wenn die Eingriffsmittel wenigstens teilweise als Zähne einer Zahnstange ausgebildet sind. Die Zahnstange kann hierbei im Bereich der oberen und/oder unteren Förderabschnitte, sofern diese geradlinig verlaufen, geradlinig ausgerichtet sein. Im Bereich der Umlenkabschnitte ist hingegen ein gebogener Verlauf sinnvoll, um einen konstanten Abstand zwischen den Zähnen der Zahnstange (die im Übrigen nicht spitz ausgebildet sein müssen) und den jeweiligen im Bereich der Umlenkabschnitte verlaufenden Endlosförderelementen sicherzustellen. Selbstverständlich ist es auch denkbar, einen Teil der Eingriffsmittel als Zähne einer Zahnstange und einen anderen Teil als Bolzen oder sonstige Elemente auszugestalten, die geeignet sind, mit dem Radelement(en) eines Transportschlittens in Eingriff zu gelangen.

Vorteilhaft ist es, wenn zumindest die überwiegende Anzahl der Eingriffsmittel einen gegenseitigen Abstand aufweisen, der der Teilung des Zahnrads des Transportschlittens entspricht. Dies ermöglicht den erfindungsgemäßen Eingriff des oder der Zahnräder eines Transportschlittens in die Zwischenräume zwischen den jeweiligen Eingriffsmitteln. Um nun einen verkantungsfreien Einlauf der genannten Zahnräder in den Bereich des Stauförderers, in dem die Eingriffsmittel vorhanden sind, zu erleichtern, kann es von Vorteil sein, wenn im Bereich zumindest eines von zwei parallel verlaufenden Umlenkabschnitten Eingangseingriffsmittel vorhanden sind, deren gegenseitiger Abstand von der Teilung des genannten Zahnrads abweicht. Würde nun ein Zahn des Zahnrads des Transportschlittens direkt auf das erste von mehreren nebeneinander angeordneten Eingangseingriffsmitteln stoßen, würde zumindest der nachfolgende Zahn des Zahnrads zwangsläufig in den Zwischenraum der nachfolgenden Eingriffsmittel eingreifen, so dass das Zahnrad zumindest ab diesem Moment mit den Eingriffsmitteln synchronisiert wäre. In dieser Ausführungsform wäre es zudem von besonderem Vorteil, wenn die entsprechenden Eingangseingriffsmittel beweglich gelagert sind, um bei einem direkten Aufeinandertreffen von Eingriffsmittel und Zahn ein Ausweichen des Eingriffsmittels zu ermöglichen. Eine Beschädigung bzw. Zerstörung der beteiligten Elemente könnte hierdurch wirkungsvoll verhindert werden.

Besonders vorteilhaft ist es, wenn der gegenseitige Abstand der Eingangseingriffsmittel in einer Transportrichtung des Transportschlittens zu- oder abnimmt. Insbesondere der zuletzt genannte Fall erlaubt einen besonders zuverlässigen Betrieb des Stauförderers, da einerseits eine Synchronisierung und andererseits ein langsames Abbremsen des Transportschlittens bewirkt werden würde.

Besondere Vorteile bringt es mit sich, wenn die Eingriffsmittel zumindest im überwiegenden Teil des entsprechenden Umlenkabschnitts eine Teilung aufweisen, die der Teilung des Zahnrads des Transportschlittens entspricht, und wenn im Bereich zumindest eines von zwei parallel verlaufenden Umlenkabschnitten ein oder mehrere Eingangseingriffsmittel vorhanden sind, deren Form von der Form der restlichen Eingriffsmittel abweicht. Auch dieses Merkmal erleichtert das Zusammenfinden von Zahnrad bzw. Zahnrädern und den Eingriffsmitteln. So wäre es beispielsweise denkbar, die Eingangseingriffsmittel im Querschnitt dünner oder spitzer zu gestalten als die restlichen Eingriffsmittel im Bereich der Umlenkabschnitte. Die Gefahr, dass das bzw. die Zahnräder mit einem Zahn direkt auf das erste von vorzugsweise mehreren Eingangseingriffsmitteln stößt, wird hierdurch wirksam vermindert.

Erfindungsgemäß sind nur im Bereich eines von zwei parallel verlaufenden Umlenkabschnitten Eingangseingriffsmittel vorhanden. So ist es zwar im restlichen Bereich der Umlenkabschnitte zweckmäßig, beide Umlenkabschnitte einer Stirnseite des Stauförderers mit Eingriffsmitteln zu versehen, um eine gleichmäßige Abstützung bzw. einen ruckelfreien Transport der Transportschlitten sicherzustellen. Hingegen ist es zur erwünschten Synchronisierung zwischen den vorhandenen Zahnrädern und den Eingriffsmitteln ausreichend, wenn im Bereich der Umlenkabschnitte jeweils nur eine der beiden parallel verlaufenden Förderbahnen mit entsprechenden Eingriffsmitteln ausgestattet ist.

Die Erfindung zeichnet sich dadurch aus, dass sich die Eingangseingriffsmittel im Bereich eines ersten von zwei parallel verlaufenden Umlenkabschnitten über einen Bereich erstrecken, der sich weiter in Richtung einer Mitte des Stauförderers erstreckt als der Bereich, über den sich die Eingangseingriffsmittel im Bereich des zweiten der zwei parallel verlaufenden Umlenkabschnitte erstrecken. Mit anderen Worten sind die Eingriffsmittel derart angeordnet, dass der Transportschlitten beim Übergang vom Bereich ohne Eingriffsmittel in den Bereich, in dem es zum Eingriff mit den Eingriffsmitteln kommt, zunächst nur auf einer von zwei Seiten, d. h. mit einem von zwei Zahnrädern, mit den Eingriffsmitteln in Kontakt kommt. Hierdurch erfolgt schließlich die Synchronisierung zwischen Zahnrädern und Eingriffsmitteln, so dass die Zähne des zweiten Zahnrads automatisch in die dafür vorgesehenen Zwischenräume der diesem Zahnrad zugeordneten Eingriffsmittel gelangt. Auch ist es von Vorteil, wenn zumindest ein Teil der Eingriffsmittel beweglich gelagert sind. Dies stellt sicher, dass es bei einer ungewollten Kollision eines Zahns des oder der Zahnräder eines Transportschlittens mit einem der Eingriffsmittel nicht zu einer Beschädigung der beteiligten Bauteile kommen kann. Das Eingriffsmittel sollte hierfür zumindest in eine Richtung beweglich sein, die windschief zur Drehachse des bzw. der Zahnräder verläuft.

Vorteile bringt es zudem mit sich, wenn zumindest ein Teil der Eingriffsmittel federnd gelagert sind. Hierdurch wird sichergestellt, dass das Eingriffsmittel nach einer Kollision mit einem Zahn eines Transportschlittenzahnrads und dem Passieren des Transportschlittens wieder in seine Ausgangsstellung zurückkehrt. Das Eingriffsmittel kann hierbei in nur eine oder aber auch mehrere Richtungen beweglich gelagert sein. Auch sei bemerkt, dass nicht alle Eingriffsmittel beweglich bzw. federnd gelagert sein müssen. So ist es in vielen Fällen ausreichend, nur die oben genannten Eingangseingriffsmittel entsprechend zu lagern und die restlichen Eingriffsmittel starr zu fixieren.

Besonders vorteilhaft ist es, wenn zumindest ein Teil der Eingriffsmittel über ein elastisches Zwischenelement an oder in einem Trägerabschnitt (z. B. einem Seitenblech oder einem Rahmenelement) des Stauförderers gelagert ist. Das entsprechende Eingriffsmittel ist in diesem Fall nicht starr mit einem entsprechenden Trägerabschnitt des Stauförderers verbunden. Vielmehr erlaubt das genannte Zwischenelement eine Relativbewegung zwischen Eingriffsmittel und Trägerabschnitt, so dass das Eingriffsmittel durch seine Beweglichkeit ein Ausweichen vor einem sich nähernden Zahn eines Transportmittelzahnrads erlaubt.

Vorteilhaft ist es zudem, wenn das Zwischenelement als Gummihülse ausgebildet ist, die einen Abschnitt des Eingriffsmittels zumindest teilweise umgibt. Die Gummihülse kann beispielsweise eine Verstärkung, z. B. in Form einer die Hülse durchziehenden oder umgebenden Metallhülse, besitzen. Zudem ist es von Vorteil, die Gummihülse in bzw. an dem Trägerabschnitt des Stauförderers mit Hilfe einer Klebeverbindung zu fixieren. Ferner kann das Eingriffsmittel mit einer Schraube oder einer Gewindestange in Verbindung stehen, die den Trägerabschnitt durchdringt und die schließlich mit Hilfe einer Mutter gegenüber dem Trägerabschnitt festgezogen werden kann. Im Ergebnis wird das Eingriffsmittel zwar einerseits ortsfest gegenüber dem Trägerelement gehalten. Andererseits ermöglicht die Gummihülse eine gewisse Relativbewegung zwischen Trägerabschnitt und Eingriffsmittel, so dass eine Beschädigung derselben verhindert werden kann.

Ebenso kann es von Vorteil sein, wenn zumindest ein Teil der Eingriffsmittel, beispielsweise die Eingangseingriffsmittel, in oder an einem Einsatz gelagert sind. Alternativ kann auch vorgesehen sein, dass die entsprechenden Eingriffsmittel einteilig mit dem Einsatz ausgebildet sind, wobei es in beiden Fällen von Vorteil ist, wenn der Einsatz federnd im Bereich des oberen Förderabschnitts oder eines der Umlenkabschnitte gelagert ist. Durch die genannte Weiterbildung der Erfindung kann ein Teil der Eingriffsmittel durch die Verbindung mit dem Einsatz (oder dessen einteiliger Ausbildung mit demselben) als eine Einheit ausgebildet werden, die wiederum gegenüber dem Förderabschnitt bzw. dem jeweiligen Umlenkabschnitt beweglich gelagert sein kann. Beim Kontakt der Eingriffsmittel mit einem Radelement des Transportschlittens ist schließlich eine Relativbewegung zwischen dem Radelement und den Eingriffsmitteln möglich, so dass das Radelement ohne die Gefahr eines Verkantens in den gewünschten Eingriff mit den genannten Eingriffsmitteln gelangen kann, da diese bei einer drohenden Kollision eines Zahnrad des Radelements mit einem der Eingriffsmittel ein gewisses Stück nachgeben können.

Vorteilhaft kann es in diesem Zusammenhang sein, wenn der Einsatz über einen oder mehrere Lagerbolzen, vorzugsweise linear, beweglich am oberen Förderabschnitt oder einem der Umlenkabschnitte gelagert ist. Der Einsatz kann hierfür eine oder mehrere Durchbrechungen, beispielsweise in Form von Bohrungen, aufweisen, in die die Lagerbolzen hineingreifen oder die von den Lagerbolzen durchgriffen werden. Die Lagerbolzen dienen in diesem Fall als Führung während der Bewegung des Einsatzes.

Hierbei kann es schließlich von Vorteil sein, wenn der Einsatz mit Hilfe eines oder mehrerer elastischer Elemente, beispielsweise in Form von einer oder mehreren Druckfedern, in Richtung einer benachbarten Endloskette gepresst wird. Mit anderen Worten stellen die elastischen Elemente sicher, dass sich der Einsatz ohne Kontakt mit einem der Radelemente an einer vorgegebenen Position befindet, in der die Eingriffsmittel des Einsatzes in einer Flucht mit zumindest einem Teil der angrenzenden Eingriffsmittel stehen. Die Lagerbolzen können hierfür beispielsweise durch Schrauben gebildet werden, wobei sich das jeweilige elastische Element zwischen dem Schraubenkopf und dem Einsatz befinden kann und diesen somit in die dem Schraubenkopf abgewandte Richtung und hierbei in Richtung einer der Endlosketten presst.

Weitere Vorteile der Erfindung sind in den nachfolgenden Ausführungsbeispielen beschrieben. Es zeigen:
- **Figur 1**: eine Seitenansicht der wesentlichen Bestandteile eines erfindungsgemäßen Stauförderers,
- **Figur 2**: den linken Ausschnitt aus Figur 1 mit veränderter Stellung des Transportschlittens,
- **Figur 3**: eine Schnittdarstellung entlang der Linie A-A' in Figur 1,
- **Figur 4**: einen Ausschnitt eines erfindungsgemäßen Stauförderers in einer teilweise geschnittenen Seitenansicht,
- **Figur 5**: einen Ausschnitt eines weiteren erfindungsgemäßen Stauförderers in einer teilweise geschnittenen Seitenansicht,
- **Figur 6**: ein erfindungsgemäßes Eingriffsmittel in Form eines Bolzens in einer ersten Stellung,
- **Figur 7**: das Eingriffsmittel gemäß Figur 6 in einer zweiten Stellung,
- **Figur 8**: einen Ausschnitt eines weiteren erfindungsgemäßen Stauförderers in einer teilweise geschnittenen Seitenansicht,
- **Figur 9**: einen Ausschnitt eines weiteren erfindungsgemäßen Stauförderers in einer teilweise geschnittenen Seitenansicht,
- **Figur 10**: einen Ausschnitt eines weiteren erfindungsgemäßen Stauförderers in einer teilweise geschnittenen Seitenansicht,
und
- **Figur 11**: den Ausschnitt gemäß Figur 10 mit veränderter Stellung des gezeigten Einsatzes.

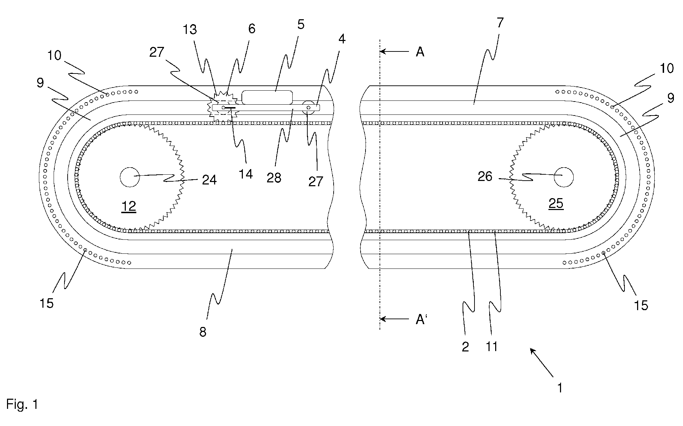

Figur 1 zeigt eine Seitenansicht der wesentlichen Bestandteile eines erfindungsgemäßen Stauförderers 1, d. h. einen Transportschlitten 4 für die Aufnahme eines nur in Figur 1 gezeigten Förderguts 5 (wobei selbstverständlich auch mehrere Transportschlitten 4 vorhanden sein können) sowie die Bestandteile, die für die Führung und den Antrieb des oder der Transportschlitten 4 nötig sind. Auf die Darstellung weiterer Bauteile, beispielsweise eines der gezeigten Elemente tragenden Rahmengestells, wurde aus Übersichtsgründen verzichtet. Es versteht sich jedoch von selbst, dass entsprechende Elemente vorhanden sind, über die der Stauförderer 1 auf einer ebenen Fläche abstellbar ist.

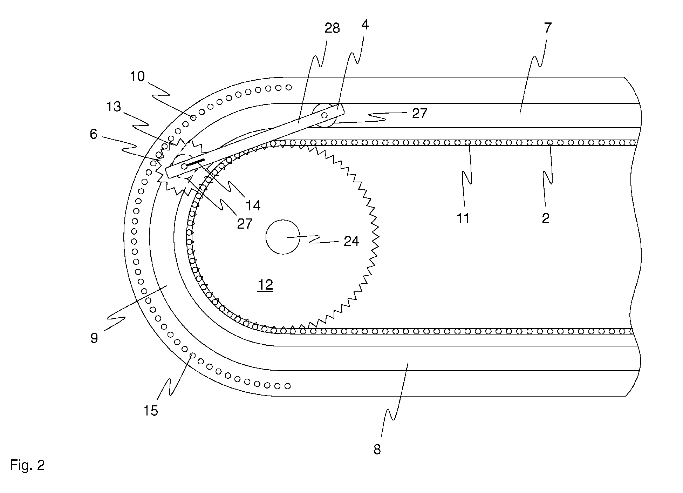

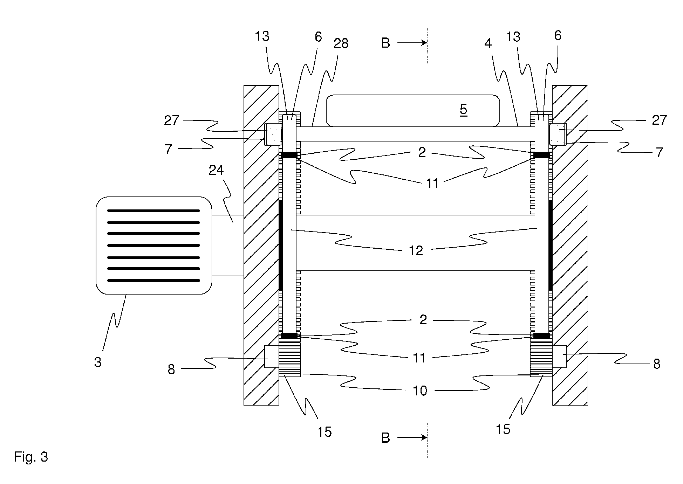

Die grundsätzliche Funktion des Stauförderers 1 ist den Figuren 1 bis 3 zu entnehmen, wobei Figur 3 eine Schnittansicht gemäß der Schnittebene A-A' in Figur 1 und die Figuren 1 und 2 (teilweise vollständige) Schnittansichten gemäß der Schnittebene B-B' in Figur 3 zeigen.

Prinzipiell besitzt der Stauförderer 1 zwei parallel zueinander verlaufende Endlosförderelemente 2, bei denen es sich beispielsweise um Endlosketten 11 handeln kann (alternativ wäre auch der Einsatz von entsprechenden Endlosriemen denkbar). Die Endlosförderelemente 2 werden mit Hilfe von Umlenkelementen geführt. Kommen die gezeigten Endlosketten 11 zum Einsatz, handelt es sich hierbei vorzugsweise um zwei parallel angeordnete und mit Hilfe einer Antriebsachse 24 mit einem Antrieb 3 verbundene Antriebszahnräder 12 sowie um zwei ebenfalls parallel angeordnete und bei Bedarf mit Hilfe einer Tragachse 26 verbundene Führungszahnräder 25 (im Fall der genannten Endlosriemen kämen entsprechende Umlenkrollen zum Einsatz, die selbstverständlich ebenfalls mit dem genannten Antrieb 3 zu verbinden wären).

Wie insbesondere der Figur 1 zu entnehmen ist, können die Endlosketten 11 nun bei aktiviertem Antrieb 3 mit Hilfe der genannten Zahnräder 12, 25 jeweils entlang einer Förderbahn bewegt werden, die (jeweils pro Endloskette 11) einen oberen Förderabschnitt 7, einen unteren Förderabschnitt 8 sowie zwei die genannten Förderabschnitte 7, 8 miteinander verbindende Umlenkabschnitte 9 umfasst.

Grundsätzlich dient nun der Stauförderer 1 der gezielten Versorgung einer auf einer ersten Seite (bezogen auf Figur 1 z. B. links) des Stauförderers 1 platzierten Abnahmestelle (nicht gezeigt) mit dem genannten Fördergut 5, welches auf einer gegenüberliegenden zweiten Seite (in Figur 1: rechts) auf den Transportschlitten 4 abgelegt wird. Der Transportschlitten 4 verfügt hierfür über eine Fördergutaufnahme 28, die wiederum mit vorzugsweise vier Tragrollen 27 in Verbindung steht, über die er entlang der genannten Führungsbahnen geführt wird. Um einen Kraftschluss zwischen dem Transportschlitten 4 und den Endlosförderelementen 2 und damit die Bewegung des Transportschlittens 4 gewährleisten zu können, besitzt dieser in der Regel ein oder auch mehrere Radelemente 6. Im Fall des gezeigten Stauförderers 1 handelt es sich um zwei beidseitig der Fördergutaufnahme 28 platzierte Zahnräder 13, die mit den Endlosförderelementen 2 in Eingriff stehen. Im Fall der genannten Endlosriemen kämen selbstverständlich entsprechende Rollen zum Einsatz, die mit den Endlosriemen in Kontakt ständen.

Um nun während des Antriebs der Endlosförderelemente 2 ein Drehen der Radelemente 6 und damit eine Relativbewegung zwischen den genannten Bauteilen zu verhindern, besitzt der Transportschlitten 4 vorzugsweise ein Bremselement 14, das auf das oder die Radelemente 6 bzw. deren Aufhängung wirkt. Das Bremselement 14 kann beispielsweise als Federbolzen ausgebildet sein, der eine reibschlüssige Kraft auf die Achse des entsprechenden Radelements 6 ausübt, so dass ein Drehen desselben bei einer Bewegung der Endlosförderelemente 2 unterbleibt.

Die Wirkung des bzw. der Bremselemente 14 darf jedoch nur so hoch sein, dass bei einer bestimmten Kraftaufwendung ein Drehen der Radelemente 6 möglich ist. Dies ist entscheidend, da der Transportschlitten 4 bei Bedarf bei sich weiter bewegenden Endlosförderelementen 2 abgebremst bzw. angehalten werden können soll. Kommen nämlich beispielsweise mehrere Transportschlitten 4 zum Einsatz, die jeweils auf einer Seite des Stauförderers 1 mit einem Fördergut 5 beladen werden, so tritt immer wieder der Fall ein, dass das Fördergut 5 auf der anderen Seite des Stauförderers 1 nicht in der Taktung entnommen wird, in der er auf den Transportschlitten 4 aufgegeben wird. In diesem Fall ist es schließlich wünschenswert, dass die vollen Transportschlitten 4 im Bereich der Entnahmestelle (Seite, auf der das Fördergut 5 entnommen wird) aufgestaut werden, wobei entleerte Transportschlitten 4 gleichzeitig in den Bereich der Aufgabestelle (Seite, auf der die Transportschlitten 4 beladen werden) zurückbewegt werden. Mit anderen Worten ist es erwünscht, dass ein Teil der Transportschlitten 4 (z. B. mit Hilfe eines aktivierbaren Abstoppers) gegenüber den Endlosförderelementen 2 stillstehen während der restliche Teil von den Endlosförderelementen 2 entlang der Förderbahnen bewegt wird. Dies wird schließlich dadurch gewährleistet, dass das Bremselement 14 nur eine bestimmte Kraft auf das oder die Radelemente 6 der Transportschlitten 4 ausübt, so dass die Transportschlitten 4 im Normalfall von den Endlosförderelementen 2 mitgenommen werden, während es im Fall eines Stopps eines Transportschlittens 4 zu einem Drehen des bzw. der Radelemente 6 und damit zu einer Relativbewegung zwischen Transportschlitten 4 und Endlosförderelementen 2 kommen kann.

Darüber hinaus muss die genannte Relativbewegung beim gezeigten erfindungsgemäßen Stauförderer auch im Bereich der beiden Umlenkabschnitte 9 möglich sein. So wird erfindungsgemäß vorgeschlagen, dass im Bereich wenigstens eines der Umlenkabschnitte 9 Eingriffsmittel 10 vorhanden sind, mit denen das bzw. die Radelement(e) 6 eines Transportschlittens 4 in Eingriff gelangen können. Die Eingriffsmittel 10, die beispielsweise durch eine Vielzahl von Bolzen 15 gebildet werden können, die seitlich in Richtung der Stauförderermitte ragen (siehe insbesondere Figur 3), sind auf einer Bahn angeordnet, die in der Seitenansicht des Stauförderers 1 zumindest bereichsweise in einem konstanten Abstand zu den Endlosförderelementen 2 verläuft. Insbesondere ist vorgesehen, dass sich die Eingriffsmittel 10 zumindest zum größten Teil auf einer Kreisbahn befinden, die konzentrisch zur Förderbahn im Bereich der Umlenkabschnitte 9 verläuft.

Gelangt nun ein Transportschlitten 4, wie in Figur 2 gezeigt, in den Bereich der Umlenkabschnitte 9, so gelangen der oder die Radelemente 6, die im Eingriff mit den Endlosförderelementen 2 stehen, auf ihrer den Endlosförderelementen 2 abgewandten Seite zusätzlich mit den Eingriffsmitteln 10 in Eingriff.

Da diese jedoch ortsfest an einem Rahmen- bzw. sonstigen Tragabschnitt des Stauförderers 1 fixiert sind, kommt es ab dem Kontakt zwischen den Eingriffsmitteln 10 und dem bzw. den Radelement(en) 6 nach Art eines Planetengetriebes bei konstanter Fördergeschwindigkeit der Endlosförderelemente 2 zu einer Reduzierung der Drehzahl des bzw. der Radelemente 6. Mit anderen Worten besitzt der Transportschlitten 4 im Bereich der Eingriffsmittel 10 eine Geschwindigkeit, die nur noch einem Bruchteil der Geschwindigkeit der Endlosförderelemente 2 entspricht. Darüber hinaus wird der Transportschlitten 4 unabhängig von der Wirkung der Bremselemente 14 durch die jeweiligen Umlenkabschnitte 9 geführt, so dass diese lediglich eine Fixierung der Radelemente 6 im Bereich der geradlinigen Förderabschnitte 7, 8 bewirken müssen. Schließlich können im Vergleich zu herkömmlichen Stauförderern 1 Antriebe 3 mit verringerter Leistung zum Einsatz kommen, da die Reduzierung der Fördergeschwindigkeit kleiner ausfällt als bei bekannten Lösungen.

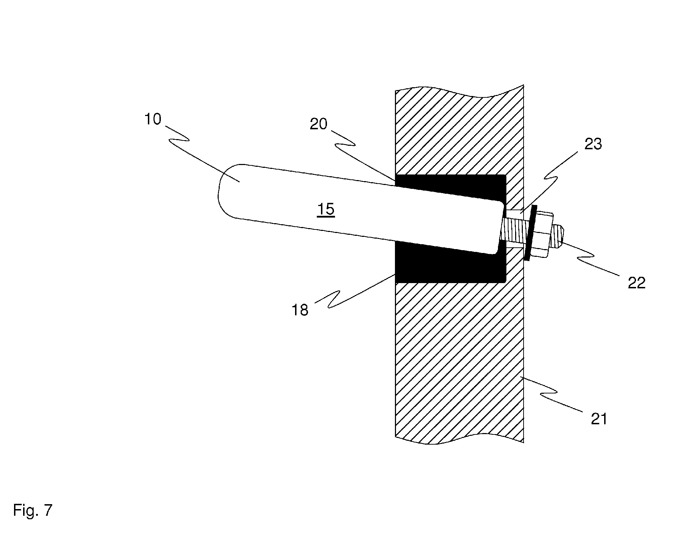

Kommen nun Endlosförderelemente 2 in Form der gezeigten Endlosketten 11, Radelemente 6 in Form der gezeigten Zahnräder 13 und Eingriffsmittel 10 in Form der gezeigten Bolzen 15 (bzw. der in Figur 7 gezeigten Zähne einer Zahnstange 16) zum Einsatz, so kann es beim Einlauf des Transportschlittens 4 in den Bereich der Eingriffsmittel 10 zu einem Verkanten der Zahnräder 13 mit den Eingriffsmitteln 10 kommen. Dies ist dann der Fall, wenn ein Zahn des entsprechenden Zahnrads 13 direkt auf einen Bolzen 15 bzw. den Zahn der Zahnstange 16 trifft. Um dies zu vermeiden, werden im folgenden mehrere Ausführungsformen der Erfindung beschrieben, in denen ein verkantungsfreier Kontakt zwischen Eingriffsmittel 10 und Zahnrad 13 gewährleistet ist.

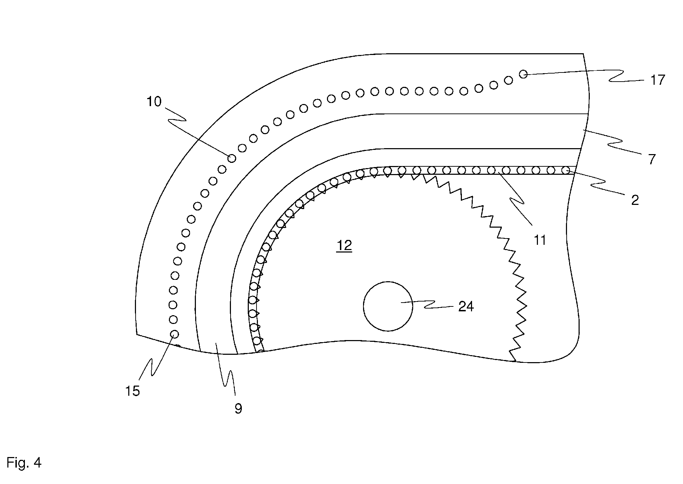

In einer ersten Ausführungsvariante ist ein Teil der Eingriffsmittel 10 als Eingangseingriffsmittel 17 ausgebildet, die entgegen der Förderrichtung des Transportschlittens 4 ansteigend platziert sind. Gelangt nun das in den Figuren 1 bis 3 gezeigte Zahnrad 13 des Transportschlittens 4 in den Bereich der Eingangseingriffsmittel 17, erfolgt eine Relativbewegung zwischen Zahnrad 13 und Endlosförderkette 11, bis die Zähne des Zahnrads 13 mit den Eingangseingriffsmitteln 17 derart synchronisiert sind, dass die Zähne in die Zwischenräume zwischen den einzelnen Eingangseingriffsmitteln 17 greifen. Beim Weitertransport des Transportschlittens 4 wird somit ein direkter Kontakt der Zahnspitzen mit den Eingriffsmitteln 10 vermieden. Während die Eingangseingriffsmittel 17 im Bereich beider in Figur 4 in senkrecht zur Blattebene hintereinander liegenden Umlenkbereichen platziert sein können, ist es in den meisten Fällen ausreichend, nur einen der beiden Umlenkbereiche mit entsprechenden Eingangseingriffsmitteln 17 zu versehen, da die beiden Zahnräder 13 des Transportschlittens 4 (siehe Figur 3) in der Regel über eine Achse verbunden sind. Die genannte Synchronisierung findet in diesem Fall auch dann statt, wenn nur eines der beiden Zahnräder 13 mit entsprechenden Eingangseingriffsmitteln 17 in Wirkverbindung kommt.

An dieser Stelle sei darauf hingewiesen, dass die Eingriffsmittel 10 auf beiden Seiten (bezogen auf Figur 1) des Stauförderers 1 angeordnet sein sollten. Hinsichtlich der genannten und im folgenden beschriebenen Eingangseingriffsmittel 17 sei ferner festgehalten, dass diese ebenfalls auf beiden Seiten platziert sein können, wobei die Platzierung stets - in Transportrichtung des bzw. der Transportschlitten 4 gesehen - vor den jeweiligen Umlenkabschnitten 9 erfolgen sollte.

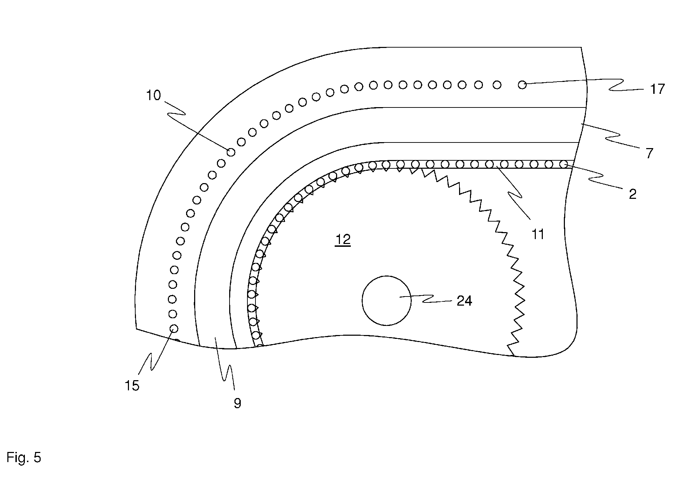

Die Möglichkeit, das bzw. die Radelemente 6 des Transportschlittens 4 im Eingangsbereich des bzw. der Umlenkabschnitte 9 mit den Eingriffsmitteln 10 zu synchronisieren, zeigt Figur 5. Im Gegensatz zu den vorherigen Ausführungsbeispielen weisen die Eingangseingriffsmittel 17 einen anderen gegenseitigen Abstand auf als die restlichen Eingriffsmittel 10. Mit anderen Worten kann es zweckdienlich sein, wenn der gegenseitige Abstand der Eingangseingriffsmittel 17 von der Teilung (d. h. dem Zahnspitzenabstand des oder der Zahnräder 13 des Transportschlittens 4) abweicht. Kommt es zu einer Kollision zwischen dem ersten Eingangseingriffsmittel 17 und einem Zahn des Zahnrads 13, so ist durch den sich im weiteren Verlauf des Förderwegs ändernden Abstand der Eingangseingriffmittel 17 sichergestellt, dass der dem genannten Zahn nachfolgende Zahn in jedem Fall in den Zwischenraum des dem ersten Eingangseingriffsmittel 17 folgenden Eingangseingriffsmittelpaars greift. Auch dies stellt schließlich die gewünschte Synchronisierung sicher.

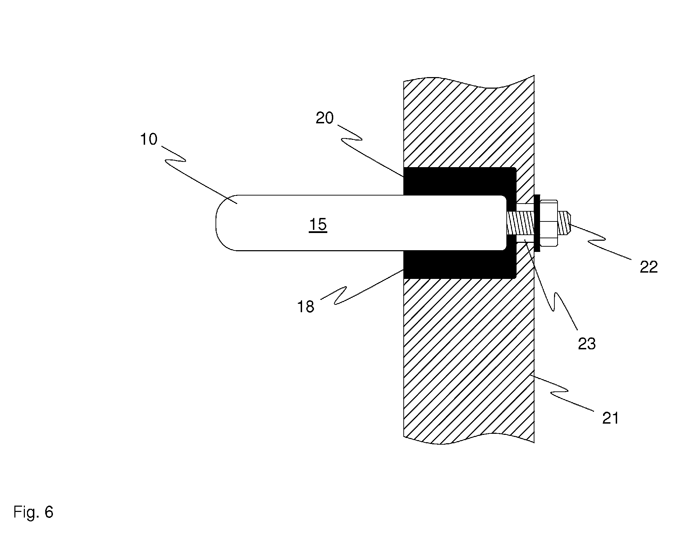

Um eine Beschädigung des ersten Eingangseingriffsmittels 17 oder des mit diesem kollidierenden Zahns des Zahnrads 13 zu vermeiden, ist es zumindest im genannten Fall von Vorteil, wenn das genannte Eingangseingriffsmittel 17 federgelagert ist, um dem Zahn ausweichen zu können. Eine mögliche Federlagerung zeigen die Figuren 6 (Normalstellung) und 7 (Ausweichstellung bei Kollision mit einem Zahn eines Zahnrads 13 des Transportschlittens 4). Das Eingriffsmittel 10 (das im gezeigten Fall als Bolzen 15 ausgebildet ist) ist im dargestellten Beispiel über ein Zwischenelement 18 (vorzugsweise in Form der gezeigten Gummihülse 20) in einem Rahmenelement 21 (oder sonstigem Tragabschnitt) des Stauförderers 1 gelagert. Um ein Herausfallen des Eingriffsmittels 10 zu vermeiden, kann dieses beispielsweise mit Hilfe einer Schraubverbindung 22 gesichert sein, die über eine Bohrung 23 mit dem Eingriffsmittel 10 zusammenwirkt. Wird nun eine Kraft auf das Eingriffsmittel 10 ausgeübt, die schräg zu dessen Längsachse wirkt, so kann das Eingriffsmittel 10, wie in Figur 7 gezeigt ausweichen, da das Zwischenelement 18 nachgibt. Ein Verkanten von Eingriffsmittel 10 und Zahnrad 13 kann hierdurch zuverlässig vermieden werden.

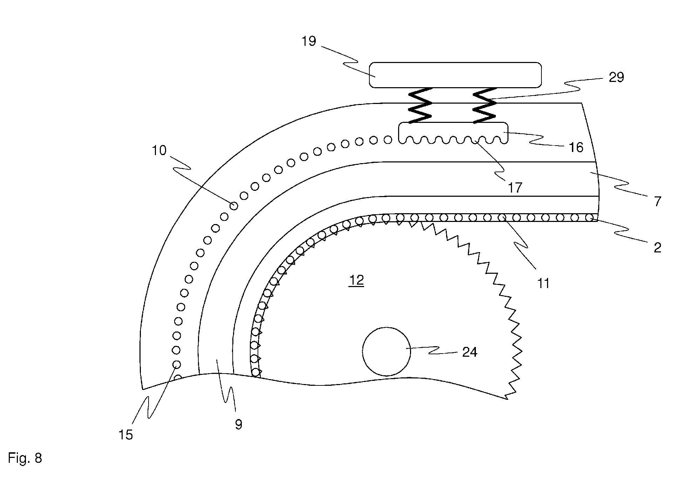

Eine alternative Möglichkeit, einen Teil der Eingriffsmittel 10 federnd zu lagern, zeigt Figur 8. Hier werden die Eingangseingriffsmittel 17 durch Zähne einer Zahnstange 16 gebildet, die mit Hilfe eines oder mehrerer Federelemente 29 an einem nur schematisch angedeuteten Trägerabschnitt 19 des Stauförderers 1 befestigt ist. Kommt es nun zu einer Kollision zwischen Zahnrad 13 und Zahnstange 16, so kann diese nach oben bzw. seitlich ausweichen. Selbstverständlich können auch hier die Eingangseingriffsmittel 17 in unterschiedlichem gegenseitigen Abstand ausgerichtet werden, um die notwendige Synchronisierung zu erleichtern. Die Zahnstange 16 kann zudem nur im Bereich einer von zwei Umlenkabschnitten 9 angeordnet sein. Denkbar ist jedoch ebenfalls, alle Umlenkabschnitte 9 jeweils einer Seite des Stauförderers 1 mit der gezeigten Zahnleiste (oder auf andere Weise realisierten Eingangseingriffsmitteln 17) zu versehen.

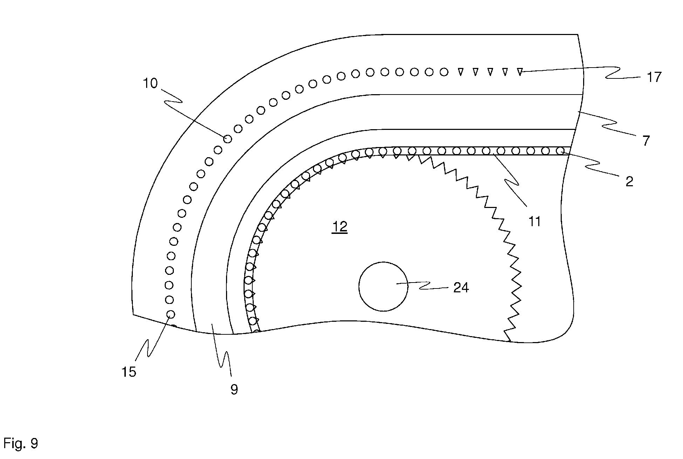

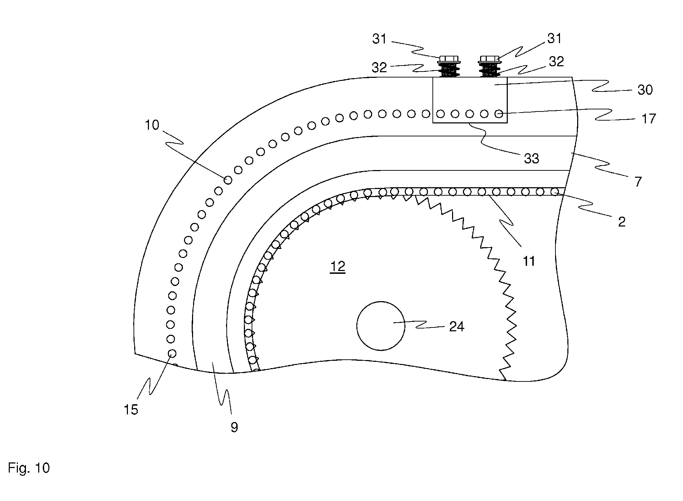

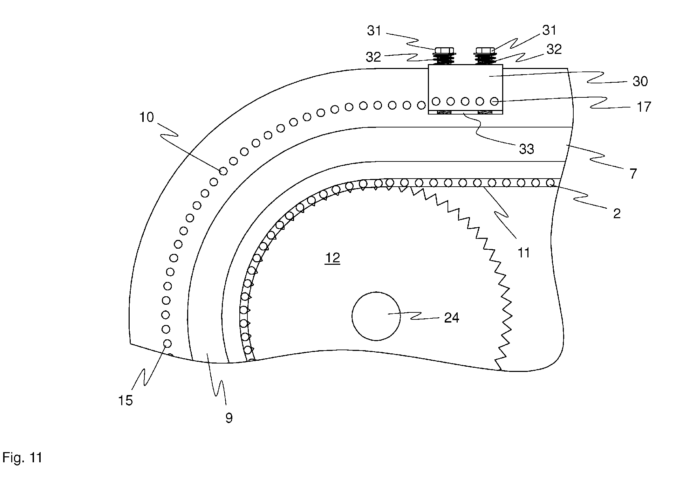

Eine weitere vorteilhafte Ausgestaltung der Eingangseingriffsmittel 17 zeigt schließlich Figur 9. Um das "Eintreffen" der Zähne der Zahnräder 13 des Transportschlittens 4 im Eingangsbereich der Umlenkabschnitte 9 zu erleichtern, weisen die Eingangseingriffsmittel 17 einen von den restlichen Eingriffsmitteln 10 abweichende Form auf. Insbesondere hat es sich bewährt, die Eingangseingriffsmittel 17 im Querschnitt besonders spitz und/oder dünn auszugestalten. Die Chance, dass die Zähne der genannten Zahnräder 13 in den Zwischenraum derartig geformter Eingangseingriffsmittel 17 gleiten, ist besonders hoch. Im restlichen Bereich finden schließlich stabilere Bolzen 15 Einsatz, um das Gewicht des Transportschlittens 4 auffangen zu können. Schließlich zeigen die Figuren 10 und 11 eine letzte Ausführungsform der vorliegenden Erfindung. Wie ein Vergleich der Figuren zeigt, sind die Eingangseingriffsmittel 17 an einem beweglichen Einsatz 30 (beispielsweise einem Metallblock) gelagert und ragen von diesem senkrecht zur Blattebene in Richtung des Betrachters. Der Einsatz 30 weist wiederum parallel zur Blattebene verlaufende Bohrungen auf, über die er in senkrechter Richtung an einem oder mehreren Lagerbolzen 31 beweglich gelagert ist.

Die Lagerbolzen 31 können beispielsweise, wie angedeutet, durch Schrauben gebildet sein, die in korrespondierende Gewinde des oberen Förderabschnitts 7 eingeschraubt sein können (wobei der obere Förderabschnitt 7 eine Aussparung 33 aufweisen kann, in der der Einsatz 30geführt ist). Zwischen dem oberen Abschnitt 7 des jeweiligen Lagerbolzens 31 (der beispielsweise durch den gezeigten Schraubenkopf gebildet sein kann) und dem Einsatz 30 befinden sich vorzugsweise Druckfedern 32, die den Einsatz 30 in die in Figur 10 gezeigte Stellung drücken. Sobald die Eingangseingriffsmittel 17 mit der Spitze eines Zahnelements eines vorbeifahrenden Radelements 6 in Kontakt kommen, wird der Einsatz 30 schließlich gegen die Federkraft nach oben gedrückt (Stellung gemäß Figur 11), so dass eine Synchronisierung zwischen den Zahnelementen des Radelements 6 und den Eingangseingriffsmitteln 17 erfolgen kann. Ein Verkanten des Radelements 6 wird auf diese Weise zuverlässig vermieden.

Die vorliegende Erfindung ist nicht auf das dargestellte und beschriebene Ausführungsbeispiel beschränkt. Abwandlungen im Rahmen der Patentansprüche sind ebenso möglich wie eine Kombination der Merkmale, auch wenn sie in unterschiedlichen Ausführungsbeispielen dargestellt und beschrieben sind.

### Bezugszeichenliste

- 1: Stauförderer
- 2: Endlosförderelement
- 3: Antrieb
- 4: Transportschlitten
- 5: Fördergut
- 6: Radelement
- 7: oberer Förderabschnitt
- 8: unterer Förderabschnitt
- 9: Umlenkabschnitt
- 10: Eingriffsmittel
- 11: Endloskette
- 12: Antriebszahnrad
- 13: Zahnrad
- 14: Bremselement
- 15: Bolzen
- 16: Zahnstange
- 17: Eingangseingriffsmittel
- 18: Zwischenelement
- 19: Trägerabschnitt
- 20: Gummihülse
- 21: Rahmenelement
- 22: Schraubverbindung
- 23: Bohrung
- 24: Antriebsachse
- 25: Führungszahnrad
- 26: Tragachse
- 27: Tragrolle
- 28: Fördergutaufnahme
- 29: Federelement
- 30: Einsatz
- 31: Lagerbolzen
- 32: Druckfeder
- 33: Aussparung

## Patentansprüche

1. Stauförderer mit zumindest zwei parallel zueinander verlaufenden und jeweils entlang einer Förderbahn bewegbaren Endlosförderelementen (2), von denen wenigstens eines mit Hilfe eines Antriebs (3) antreibbar ist, und mit wenigstens einem Transportschlitten (4) für ein Fördergut (5), wobei der Transportschlitten (4) über wenigstens ein drehbares Radelement (6) mit den Endlosförderelementen (2) in Kontakt steht und durch diese entlang der parallel verlaufenden Förderbahnen der Endlosförderelemente (2) bewegbar ist, und wobei die Förderbahnen in einer Seitenansicht des Stauförderers (1) jeweils einen oberen Förderabschnitt (7) und einen unteren Förderabschnitt (8) sowie jeweils zwei gebogene und die jeweiligen Förderabschnitte (7; 8) miteinander verbindende Umlenkabschnitte (9) umfasst, wobei im Bereich wenigstens eines der Umlenkabschnitte (9) Eingriffsmittel (10) vorhanden sind, die auf einer Bahn angeordnet sind, die in der Seitenansicht des Stauförderers (1) zumindest bereichsweise in einem konstanten Abstand zu den Endlosförderelementen (2) verläuft und mit denen das Radelement (6) des Transportschlittens (4) beim Passieren des entsprechenden Umlenkabschnitts (9) in Eingriff gelangt,
wobei nur im Bereich eines von zwei parallel verlaufenden Umlenkabschnitten (9) Eingangseingriffsmittel (17) vorhanden sind, **dadurch gekennzeichnet, dass** sich die Eingangseingriffsmittel (17) im Bereich eines ersten von zwei parallel verlaufenden Umlenkabschnitten (9) über einen Bereich erstrecken, der sich weiter in Richtung einer Mitte des Stauförderers (1) erstreckt als der Bereich, über den sich die Eingangseingriffsmittel (17) im Bereich des zweiten der zwei parallel verlaufenden Umlenkabschnitte (9) erstrecken.

2. Stauförderer gemäß vorangegangenem Anspruch, **dadurch gekennzeichnet, dass** die Umlenkabschnitte (9) in der Seitenansicht des Stauförderers (1) einen kreisbogenförmigen Verlauf aufweisen, und dass zumindest ein Teil der Eingriffsmittel (10) auf einer zum Verlauf des jeweils benachbarten Umlenkabschnitts (9) konzentrisch verlaufenden Bahn angeordnet sind.

3. Stauförderer gemäß einem oder mehreren der vorangegangenen Ansprüche, **dadurch gekennzeichnet, dass** die Endlosförderelemente (2) als Endlosketten (11) ausgebildet sind, die über wenigstens ein Antriebszahnrad (12) mit dem Antrieb (3) des Stauförderers (1) in Wirkverbindung stehen.

4. Stauförderer gemäß vorangegangenem Anspruch, **dadurch gekennzeichnet, dass** das Radelement (6) des Transportschlittens (4) als Zahnrad (13) ausgebildet ist, das im Eingriff mit einer der Endlosketten (11) steht, wobei das Zahnrad (13) mit einem transportschlitteneigenen Bremselement (14) in Wirkverbindung steht, so dass eine Bewegung der Endlosketten (11) eine Bewegung des entsprechenden Transportschlittens (4) zumindest entlang der Förderabschnitte (7; 8) bewirkt.

5. Stauförderer gemäß vorangegangenem Anspruch, **dadurch gekennzeichnet, dass** die Eingriffsmittel (10) als Bolzen (15) ausgebildet sind, die vorzugsweise senkrecht zu einer Transportrichtung des Transportschlittens (4) ausgerichtet sind, wobei die Bolzen (15) in Eingriff mit dem Zahnrad (13) des die Bolzen (15) passierenden Transportschlittens (4) gelangen und hierbei bei konstanter Fördergeschwindigkeit der Endlosketten (11) nach Art eines Planetengetriebes eine Reduzierung der Geschwindigkeit des Transportschlittens (4) bewirken.

6. Stauförderer gemäß einem oder mehreren der vorangegangenen Ansprüche, **dadurch gekennzeichnet, dass** die Eingriffsmittel (10) wenigstens teilweise als Zähne einer Zahnstange (16) ausgebildet sind.

7. Stauförderer gemäß einem oder mehreren der Ansprüche 4 bis 6, **dadurch gekennzeichnet, dass** zumindest die überwiegende Anzahl der Eingriffsmittel (10) einen gegenseitigen Abstand aufweisen, der der Teilung des Zahnrads (13) des Transportschlittens (4) entspricht, und dass im Bereich zumindest eines von zwei parallel verlaufenden Umlenkabschnitten (9) Eingangseingriffsmittel (17) vorhanden sind, deren gegenseitiger Abstand von der Teilung des genannten Zahnrads (13) abweicht.

8. Stauförderer gemäß vorangegangenem Anspruch, **dadurch gekennzeichnet, dass** der gegenseitige Abstand der Eingangseingriffsmittel (17) in einer Transportrichtung des Transportschlittens (4) zu- oder abnimmt.

9. Stauförderer gemäß einem oder mehreren der Ansprüche 4 bis 8, **dadurch gekennzeichnet, dass** die Eingriffsmittel (10) zumindest im überwiegenden Teil des entsprechenden Umlenkabschnitts (9) eine Teilung aufweisen, die der Teilung des Zahnrads (13) des Transportschlittens (4) entspricht, und dass im Bereich zumindest eines von zwei parallel verlaufenden Umlenkabschnitten (9) ein oder mehrere Eingangseingriffsmittel (17) vorhanden sind, deren Form von der Form der restlichen Eingriffsmittel (10) abweicht.

10. Stauförderer gemäß einem oder mehreren der vorangegangenen Ansprüche, **dadurch gekennzeichnet, dass** zumindest ein Teil der Eingriffsmittel (10) beweglich und/oder federnd gelagert sind, und/oder dass zumindest ein Teil der Eingriffsmittel (10) über ein elastisches Zwischenelement (18) an oder in einem Trägerabschnitt (19) des Stauförderers (1) gelagert ist, wobei das Zwischenelement vorzugsweise (18) als Gummihülse (20) ausgebildet ist, die einen Abschnitt des jeweiligen Eingriffsmittels (10) zumindest teilweise umgibt.

11. Stauförderer gemäß einem oder mehreren der vorangegangenen Ansprüche, **dadurch gekennzeichnet, dass** zumindest ein Teil der Eingriffsmittel (10) in oder an einem Einsatz (30) gelagert oder einteilig mit einem Einsatz (30) ausgebildet ist, wobei der Einsatz (10) vorzugsweise federnd im Bereich des oberen Förderabschnitts (7) oder eines der Umlenkabschnitte (9) gelagert ist.

12. Stauförderer gemäß vorangegangenem Anspruch, **dadurch gekennzeichnet, dass** der Einsatz (30) über einen oder mehrere Lagerbolzen (31), vorzugsweise linear, beweglich am oberen Förderabschnitt (7) oder einem der Umlenkabschnitte (9) gelagert ist.

13. Stauförderer gemäß Anspruch 11 oder 12, **dadurch gekennzeichnet, dass** der Einsatz (30) mit Hilfe eines oder mehrerer elastischer Elemente, beispielsweise in Form von einer oder mehreren Druckfedern (32), in Richtung einer benachbarten Endloskette (11) gepresst wird.

## Claims

1. An accumulating conveyor comprising at least two continuous conveying elements (2) running parallel to each other and each movable along a conveying path, at least one of which is drivable with the aid of a drive (3), and at least one transport carriage (4) for a conveyed item (5), the transport carriage (4) contacting via at least one rotatable wheel element (6) the continuous conveying elements (2) and by which is movable along the parallel running conveying paths of the continuous conveying elements (2), and wherein the conveying paths in a side view of the accumulating conveyor (1) each comprise an upper conveying portion (7) and a lower conveying portion (8) as well as two each curved detour portions (9) interconnecting each conveying portions (7; 8), wherein in the region of at least one of the detour portions (9) intervention means (10) are provided which are arranged on a path which in a side view of the accumulating conveyor (1) runs at least portionally in a constant spacing from the continuous conveying elements (2) and with which the rotatable wheel element (6) of the transport carriage (4) on passing the corresponding detour portions (9) comes into engagement, wherein input intervention means (17) are provided only in the region of one of two detour portions (9) running in parallel, **characterized in that** said input intervention means (17) in the region of a first of two parallel running detour portions (9) extend over a region which extends further in the direction of a middle of the accumulating conveyor (1) than the region via which the input intervention means (17) extend in the region of the second of the two detour portions (9) running in parallel.

2. The accumulating conveyor as set forth in the preceding claim, **characterized in that** said detour portions (9) in the side view of the accumulating conveyor (1) comprise an arced run and that at least one part of the intervention means (10) is arranged on a path running concentrically to the run of each juxtaposed detour portion (9),

3. The accumulating conveyor as set forth in one or more of the preceding claims, **characterized in that** said continuous conveying elements (2) are configured as endless chains (11) which interact with the drive (3) of the accumulating conveyor (1) via at least one drive gearwheel (12).

4. The accumulating conveyor as set forth in the preceding claim, **characterized in that** said rotatable wheel element (6) of the transport carriage (4) is configured as a gearwheel (13) engaging one of the endless chains (11), the gearwheel (13) interacting with a braking element (14) dedicated to a transport carriage (4) so that a movement of the endless chains (11) results in a movement of the corresponding transport carriage (4) at least along the conveying portions (7;8).

5. The accumulating conveyor as set forth in the preceding claim, **characterized in that** said intervention means (10) are configured as studs (15) which are preferably arranged perpendicular to a transporting direction of the transport carriage (4), the studs (15) engaging the gearwheel (13) of the transport carriage (4) passing the studs (15) in thereby resulting in a reduction in the speed of the transport carriage (4) at constant conveying speed of the endless chains (11) in the mode of a planetary gearing assembly.

6. The accumulating conveyor as set forth in one or more of the preceding claims, **characterized in that** said intervention means (10) are configured at least in part as teeth of a gear rack (16).

7. The accumulating conveyor as set forth in one or more of the claims 4 to 6, **characterized in that** at least the majority of the intervention means (10) comprise a mutual spacing corresponding to the pitch of the gearwheel (13) of the transport carriage (4) and that in the region of at least one of two detour portions (9) running in parallel input intervention means (17) are provided, the mutual spacing of which differs from the pitch of said gearwheel (13).

8. The accumulating conveyor as set forth in the preceding claim, **characterized in that** said mutual spacing of the input intervention means (17) increases or decreases in a transporting direction of the transport carriage (4).

9. The accumulating conveyor as set forth in one or more of the claims 4 to 8, **characterized in that** said intervention means (10) comprise at least in the majority portion of the corresponding detour portions (9) a pitch which corresponds to the pitch of the gearwheel (13) of the transport carriage (4) and that in the region of at least one of two detour portions (9) running in parallel one or more input intervention means (17) are provided, the shape of which differs from the shape of the remaining intervention means (10).

10. The accumulating conveyor as set forth in one or more of the preceding claims, **characterized in that** at least part of said intervention means (10) are mounted movable and/or spring-mounted, and/or at least part of the intervention means (10) are mounted via an elastic intermediate element (18) on or in a mounting portion (19) of the accumulating conveyor (1), wherein the elastic intermediate element (18) is preferably configured as a rubber sleeve (20) surrounding a portion of each intervention means (10) at least in part.

11. The accumulating conveyor as set forth in one or more of the preceding claims, **characterized in that** at least part of said intervention means (10) are mounted in or on an insert (30) or are configured in one piece with an insert (30), the insert (30) being mounted preferably resilient in the region of the upper conveying portion (7) or one of the detour portions (9).

12. The accumulating conveyor as set forth in the preceding claim, **characterized in that** said insert (30) is mounted via one or more trunnion pins (31), preferably linearly movable on the upper conveying portion (7) or on one of the detour portions (9).

13. The accumulating conveyor as set forth in in claim 11 or 12, **characterized in that** said insert (30) is pressed with the aid of one or more elastic elements, for example in the form of one or more compression springs (32), in the direction of a juxtaposed endless chain (11).

## Revendications

1. Convoyeur à accumulation avec au moins deux éléments d'entraînement sans fin (2), parallèles l'un par rapport à l'autre et tous deux mobiles le long d'une bande d'entraînement, dont l'un des deux au moins peut être entraîné au moyen d'un système d'entraînement (3) et avec au moins une navette de transport (4) pour une charge à transporter (5), la navette (4) étant en contact avec les éléments d'entraînement sans fin grâce à au moins un élément de roue rotatif (6) et pouvant être déplacée par ceux-ci le long des bandes d'entraînement parallèles l'une par rapport à l'autre des éléments d'entraînement sans fin (2) et les bandes d'entraînement comportant en vue latérale du convoyeur à accumulation (1) chacune une section d'entraînement supérieure (7) et une section d'entraînement inférieure (8), ainsi que deux sections de renvoi courbes (9) reliant entre elles les différentes sections d'entraînement (7 ; 8), des moyens d'engrènement (10) étant présents dans la zone de l'une des sections de renvoi (9) au moins qui sont agencés sur une bande s'étendant en vue latérale du convoyeur à accumulation (1) au moins par endroits avec une distance constante par rapport aux éléments d'entraînement sans fin (2) et avec lesquels l'élément de roue (6) de la navette (4) s'engrène lorsque la navette passe la section de renvoi correspondante (9), des moyens d'engrènement d'entrée (17) n'étant présents que dans une seule des deux sections de renvoi (9) parallèles l'une par rapport à l'autre, **caractérisé en ce que** les moyens d'engrènement d'entrée (17) s'étendent dans la zone de la première de deux sections de renvoi (9) parallèles l'une par rapport à l'autre sur une zone qui continue à s'étendre davantage dans la direction du milieu du convoyeur à accumulation (1) que la zone dans laquelle les moyens d'engrènement d'entrée (17) s'étendent dans la zone de la deuxième des deux sections de renvoi (9) parallèles l'une par rapport à l'autre.

2. Convoyeur à accumulation selon la revendication précédente, **caractérisé en ce que** les sections de renvoi (9) en vue latérale du convoyeur à accumulation (1) présentent un parcours en arc de cercle et **en ce que** au moins une partie des moyens d'engrènement (10) sont agencés sur une bande concentrique par rapport au parcours de la section de renvoi (9) voisine.

3. Convoyeur à accumulation selon une ou plusieurs des revendications précédentes, **caractérisé en ce que** les éléments d'entraînement sans fin (2) se présentent comme des chaînes sans fin (11) qui sont en relation opérationnelle avec le système d'entraînement (3) du convoyeur à accumulation (1) au moyen au moins d'une roue d'engrenage d'entraînement (12).

4. Convoyeur à accumulation selon la revendication précédente, **caractérisé en ce que** l'élément de roue (6) de la navette de transport (4) se présente comme roue d'engrenage (13) qui s'engrène avec l'une des chaînes sans fin (11), la roue d'engrenage (13) étant en relation opérationnelle avec un élément de freinage propre à la navette de transport (14) de sorte qu'un mouvement des chaînes sans fin (11) induit un mouvement de la navette correspondante (4), du moins le long des sections d'entraînement (7 ; 8).

5. Convoyeur à accumulation selon la revendication précédente, **caractérisé en ce que** les moyens d'engrènement (10) se présentent comme boulons (15) qui, de préférence, sont orientés verticalement par rapport à la direction de transport de la navette de transport (4), les boulons (15) s'engrenant avec la roue d'engrenage (13) de la navette de transport (4) au moment où celle-ci passe les boulons (15) et induisant alors une réduction de la vitesse de la navette de transport (4) à une vitesse de transport constante des chaînes sans fin (11) à la manière d'un engrenage planétaire.

6. Convoyeur à accumulation selon une ou plusieurs des revendications précédentes, **caractérisé en ce que** les moyens d'engrènement (10) se présentent au moins en partie comme les dents d'une crémaillère (16).

7. Convoyeur à accumulation selon une ou plusieurs des revendications précédentes 4 à 6, **caractérisé en ce que** au moins la majorité des moyens d'engrènement (10) présentent un écart réciproque correspondant au pas de la roue d'engrenage (13) de la navette de transport (4) et que des moyens d'engrènement d'entrée (17) sont présents dans la zone d'au moins l'une des deux sections de renvoi (9) parallèles l'une par rapport à l'autre dont l'écart réciproque est différent de celui du pas de la roue d'engrenage (13) mentionnée auparavant.

8. Convoyeur à accumulation selon la revendication précédente **caractérisé en ce que** l'écart réciproque des moyens d'engrènement d'entrée (17) augmente ou diminue dans une direction de transport de la navette de transport (4).

9. Convoyeur à accumulation selon une ou plusieurs revendications précédentes 4 à 8, **caractérisé en ce que** les moyens d'engrènement (10) présentent un pas au moins dans la majeure partie de la section de renvoi correspondante (9) qui correspond au pas de la roue d'engrenage (13) de la navette de transport (4) et que un ou plusieurs moyens d'engrènement d'entrée (17) sont présents dans la zone d'au moins l'une des deux sections de renvoi (9) parallèles l'une par rapport à l'autre dont la forme est différente de celle des moyens d'engrènement restants (10).

10. Convoyeur à accumulation selon une ou plusieurs des revendications précédentes, **caractérisé en ce que** au moins une partie des moyens d'engrènement (10) est montée de manière mobile et/ou élastique, et/ou une partie au moins des moyens d'engrènement (10) est montée grâce à un élément élastique intermédiaire (18) ou dans une section support (19) du convoyeur à accumulation (1), l'élément intermédiaire (18) se présentant de préférence comme une enveloppe de caoutchouc (20) entourant au moins en partie une section du moyen d'engrènement correspondant (10).

11. Convoyeur à accumulation selon une ou plusieurs des revendications précédentes, **caractérisé en ce que** une partie au moins des moyens d'engrènement (10) est montée dans ou sur un insert (30) ou forme un bloc avec un insert (30), cet insert (10) étant de préférence monté de manière élastique dans la zone de la section d'entraînement supérieure (7) ou de l'une des sections de renvoi (9).

12. Convoyeur à accumulation selon la revendication précédente, **caractérisé en ce que** l'insert (30) est monté sur ou plusieurs boulons de palier (31), de préférence de manière linéaire, mobile sur la section d'entraînement supérieure (7) ou l'une des sections de renvoi (9).

13. Convoyeur à accumulation selon la revendication 11 ou 12, **caractérisé en ce que** l'insert (30) est pressé au moyen d'un ou plusieurs éléments élastiques, par exemple à l'aide d'un ou plusieurs ressorts de pression (32), en direction d'une chaîne sans fin (11) voisine.
